# EUROPÄISCHE PATENTSCHRIFT

(11) **EP 0 571 573 B1**
(45) Veröffentlichungstag und Bekanntmachung des Hinweises auf die Patenterteilung: **19.07.1995**
(21) Anmeldenummer: 92923670.1
(22) Anmeldetag: 17.11.1992
(51) Int. Cl.: B61C 9/52, F16D 3/60

(54) **GELENKKUPPLUNG**
JOINT COUPLING
ACCOUPLEMENT ARTICULE

(30) Priorität: 16.12.1991 DE 4141520
(43) Veröffentlichungstag der Anmeldung: 01.12.1993
(73) Patentinhaber: CENTA-ANTRIEBE KIRSCHEY GmbH, D-42781 Haan (DE)
(72) Erfinder: KIRSCHEY, Gerhard, D-5600 Wuppertal 11 (DE)
(74) Vertreter: Patentanwälte Ostriga & Sonnet
(86) Internationale Anmeldenummer: DE9200974
(87) Internationale Veröffentlichungsnummer: WO9311988

(56) Entgegenhaltungen:
- GB-A- 1 210 204

## Beschreibung

Die Erfindung bezieht sich auf eine Kupplung nach dem Oberbegriff des Anspruchs 1.

Eine solche Kupplung ist etwa aus der DE-OS 30 49 054 oder GB-A-1 210 204 bekannt. Sie dient - wie dort beschrieben - insbesondere zur Übertragung der Motorleitung eines elektrisch angetriebenen Schienenfahrzeugs von einem ersten Flansch einer Hohlwelle auf einen zweiten Flansch einer von dieser umhüllten und radial zu ihr beweglich angeordneten Treibachse. Dazu ist eine Viergelenkkette aus dem ersten Flansch als der antreibenden ersten Kupplungshälfte, dem ersten Paar von Lenkerhebeln und dem Zwischenglied und eine zweite Viergelenkkette aus dem Zwischenglied, den Lenkerhebeln und dem zweiten Flansch als der angetriebenen zweiten Kupplungshälfte gebildet. Das Zwischenglied besteht aus zwei in Richtung quer zu seiner Achse geteilten bogenförmigen Hälften, die mittels zweier etwa tangential angeordneter Paßschrauben lösbar miteinander verbunden sind. Dadurch ist es möglich, das Zwischenglied und die Lenkerhebel nachträglich montieren bzw. gesondert demontieren zu können. Dies ist allerdings ziemlich umständlich. Außerdem ist die bekannte Kupplung relativ aufwendig aufgebaut, insbesondere ihr Zwischenglied.

Der Erfindung liegt daher die Aufgabe zugrunde, eine Kupplung der als bekannt vorausgesetzten Art einerseits montage- und demontagefreundlicher zu gestalten sowie andererseits insbesondere hinsichtlich der Ausgestaltung des Zwischengliedes erheblich zu vereinfachen.

Die erfindungsgemäße Lösung der Aufgabe ist im Kennzeichenteil des Anspruchs 1 angegeben. Weitere vorteilhafte und zweckmäßige Merkmale ergeben sich aus den Unteransprüchen.

Entsprechend der Erfindung dienen die Schraubbolzen, mit denen die Lenkerhebel an dem Zwischenglied angeschlossen sind, zugleich dazu, die Zwischengliedhälften selbst miteinander zu verbinden. Gegenüber dem Stand der Technik entfallen mithin die beiden besonderen Paßschrauben sowie alle Maßnahmen und Einrichtungen zu deren Anordnung und Handhabung. Wesentlich vor allem ist aber auch die Ausbildung der Zwischengliedhälften in der Weise, daß jeweils beide Endabschnitte einer Zwischengliedhälfte in derselben Ebene liegen. Dies nämlich ermöglicht es, jede Zwischengliedhälfte zumindest hinsichtlich ihrer Anlenkzonen an den Schraubenbolzen kippmomentfrei anzuordnen und sie aus Blech, insbesondere Stahl- oder Titanblech, zu schneiden. Das gesamte Zwischenglied kann somit trotz in jeder Beziehung ausreichender Festigkeit aus preiswertem Material und vor allem mittels kostengünstiger Herstellungsverfahren, wie etwa Stanzen, Sägen, Funkenerodieren, Laser- oder Wasserstrahlschneiden rationell erzeugt werden. Außerdem benötigt es nur sehr geringen axialen Einbauraum zwischen den beiden Kupplungshälften. Demgegenüber konnte das zur Aufnahme der Lenkerhebel mehrfach gegabelte, beachtlichen Raum beanspruchende bekannte Zwischenglied funktionsgerecht nur als kostspieliges Stahlgußstück oder Schmiedeteil ausgeführt sein.

Die Erfindung wird nachfolgend anhand mehrerer in den Zeichnungen dargestellter Ausführungsbeispiele näher erläutert. In den Zeichnungen zeigen:
- Fig. 1: eine Ansicht eines bei der erfindungsgemäßen Kupplung verwendeten Zwischengliedes,
- Fig. 2: einen Längsschnitt entsprechend der Schnittlinie II-II in Fig. 1,
- Fig. 3: eine Aufsicht auf eine Kupplung in deren Achsrichtung gesehen,
- Fig. 4: einen Schnitt entsprechend der Schnittlinie A-A in Fig. 3,
- Fig. 5: einen Schnitt entsprechend der Schnittlinie B-B in Fig. 3,
- Fig. 6: eine der Fig. 3 entsprechende Ansicht einer zweiten Kupplungs-Ausführung,
- Fig. 7: einen Schnitt nach der Schnittlinie A-A in Fig. 6,
- Fig. 8: einen Schnitt entsprechend Schnittlinie B-B der Fig. 6,
- Fig. 9: eine Ansicht auf eine Kupplung einer dritten Ausführungsform,
- Fig. 10: einen Schnitt entsprechend der Schnittlinie B-B der Fig. 9.

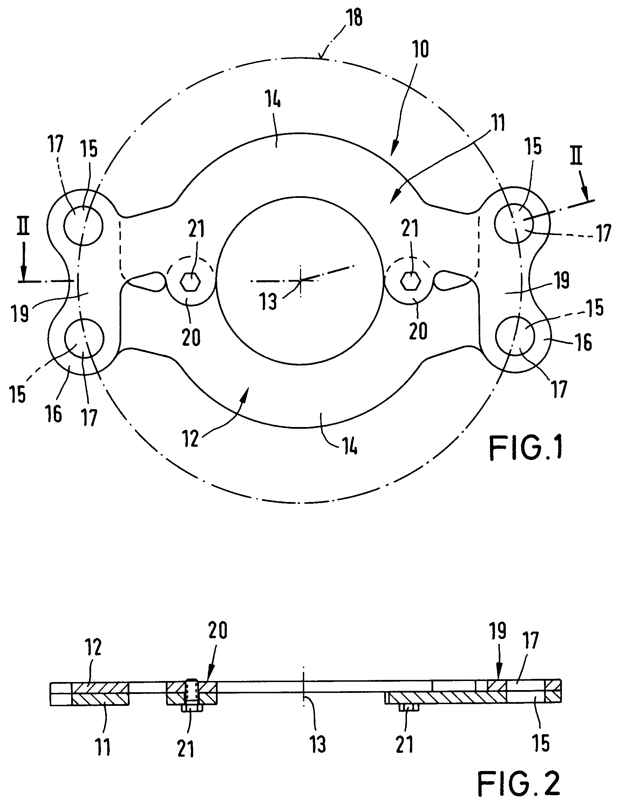

Das in Fig. 1 insgesamt mit 10 bezeichnete Zwischenglied besteht aus zwei identischen Zwischengliedhälften 11 und 12. Jedes Zwischenglied ist im wesentlichen bogenförmig um die Zentralachse 13 einer später zu beschreibenden Kupplungsanordnung geführt. Seinem bogenförmigen Hauptteil 14 benachbart weist jede Zwischengliedhälfte 11, 12 im Bereich ihrer beiden äußeren Enden eine Bohrung 15 sowie am Ende eines verlängerten Abschnitts 16 eine zweite Bohrung 17 auf. Jede der beiden Bohrungen 15, 17 der einer Zwischengliedhälfte 11 befindet sich innerhalb eines entsprechenden Überdeckungsbereichs 19 mit der zweiten Zwischengliedhälfte 12 in Axialflucht zu den entsprechenden Bohrungen 17 und 15 dieser zweiten Kupplungshälfte 12. Alle Bohrungen 15, 17 beider Zwischengliedhälften 11 und 12 liegen dabei auf einem gemeinsamen, mit 18 bezeichneten Teilkreis.

Die beiden entsprechend Fig. 1 gegensinnig aufeinandergelegten, jedoch untereinander identischen Zwischengliedhälften 11 und 12 besitzen darüber hinaus noch radial weiter innen zwei weitere Überdeckungsbereiche 20, innerhalb derer sie mit jeweils einer Schraube 21 lösbar aneinanderbefestigt sind. Die Schrauben 21 dienen dazu, die aus recht dünnem Blech geschnittenen Zwischengliedhälften 11 und 12 aneinander zu heften und die Zwischenglied-Anordnung im Hinblick auf ihre Steifigkeit, insbesondere Knickfestigkeit, zu verstärken.

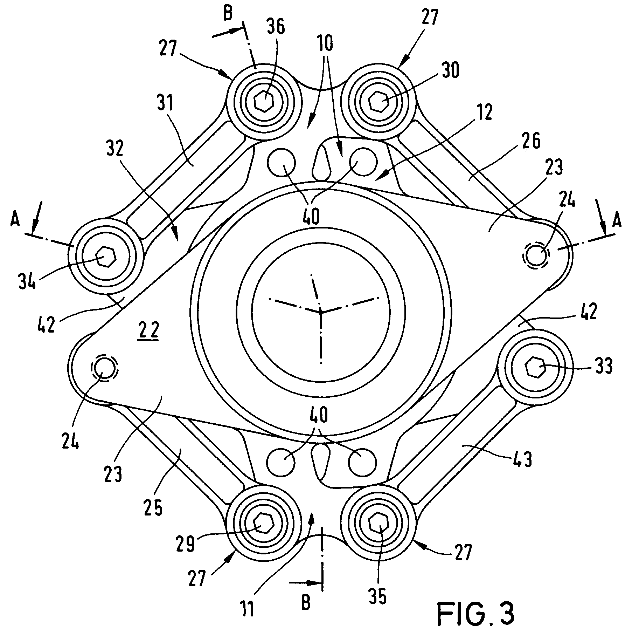

In Fig. 3 sind die Zwischengliedhälften 11 und 12 in eine Kupplung eingebaut gezeigt. An die mit 22 bezeichnete erste Kupplungshälfte sind an radialen Auslegern 23 mit Hilfe von Schraubbolzen 24 je ein Lenkerhebel 25, 26 angelenkt. Jeder dieser beiden Lenkerhebel 25, 26 weist an seinem anderen Ende eine Gabel 27 bzw. 28 auf, deren Gabelschenkel jeweils das aus den beiden Zwischengliedhälften 11 und 12 gebildete Zwischenglied 10 zwischen sich fassen. Der zur Verbindung vorgesehene Gewindebolzen 29 durchgreift die Zwischengliedhälfte 11 durch ihre innere Bohrung 15 und die Zwischengliedhälfte 12 durch deren äußere Bohrung 17. Entsprechend durchgreift der dem Gelenkhebel 26 zugeordnete Schraubbolzen 30 die äußere Bohrung 17 der Zwischengliedhälfte 11 und die weiter innen liegende Bohrung 15 der die Zwischengliedhälfte 11 bereichsweise axial wie im wesentlichen radial überdeckenden zweiten Zwischengliedhälfte 12. In entsprechender Anordnung führen zwei weitere Gelenkhebel 43 und 31 von durch Schraubenbolzen 35 und 36 markierten Anlenkstellen am Zwischenglied 10 zu der mit 32 bezeichneten zweiten Kupplungshälfte. Daran sind die Lenkerhebel 43 und 31 mit Hilfe der Schraubenbolzen 33 und 34 an Armen 42 dieses zweiten Kupplungsteiles 32 angelenkt.

Jeder der Schraubenbolzen 29, 30 sowie 35 und 36 dient also zum einen dazu, die jeweiligen Lenkerhebel 25, 26 sowie 43 und 31 am Zwischenglied anzulenken, wobei demzufolge zugleich auch die Zwischengliedhälften 11 selbst ohne notwendige besondere Schraubverbindungen miteinander verbunden sind. Die besonderen Schraubverbindungen 21 entsprechend Fig. 1 und 2 müssen also bei insbesondere dicken Zwischengliedhälften nicht vorgesehen sein. Sie haben den Zweck, die Steifigkeit, insbesondere Knickfestigkeit des Zwischengliedes zu erhöhen. Infolge dieser zusätzlichen Verbindung der beiden Zwischengliedhälften 11 und 12 aneinander mit Hilfe der Verschraubungen 21 können aber die Zwischengliedhälften aus dünnerem Blech gefertigt sein als dies ohne diese Verbindung möglich wäre.

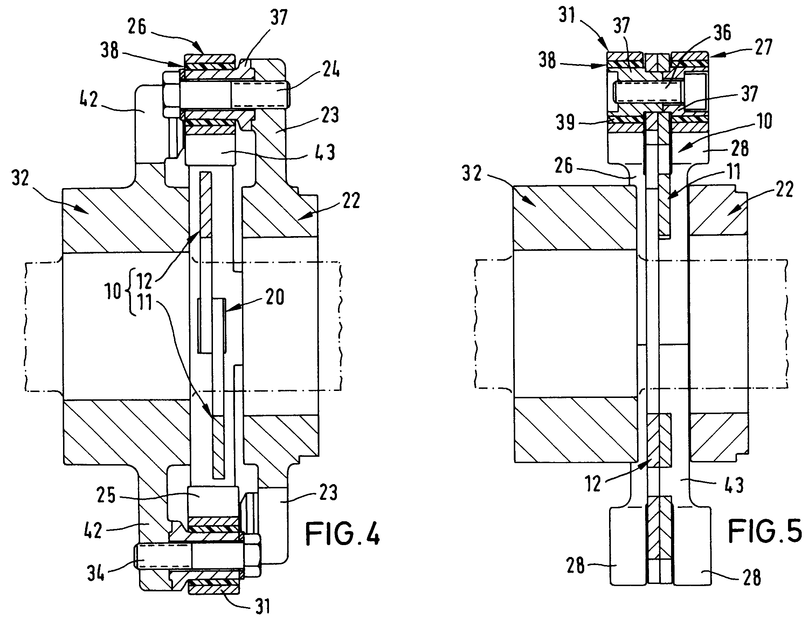

Wie die Fig. 4 und 5 zeigen, benötigt die Anordnung nur sehr geringen axialen Einbauraum zwischen den beiden Kupplungshälften 22 und 32.

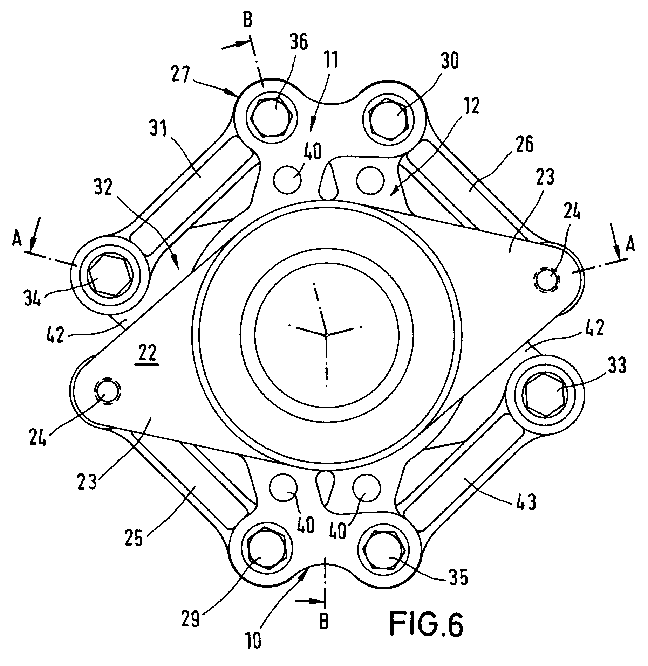

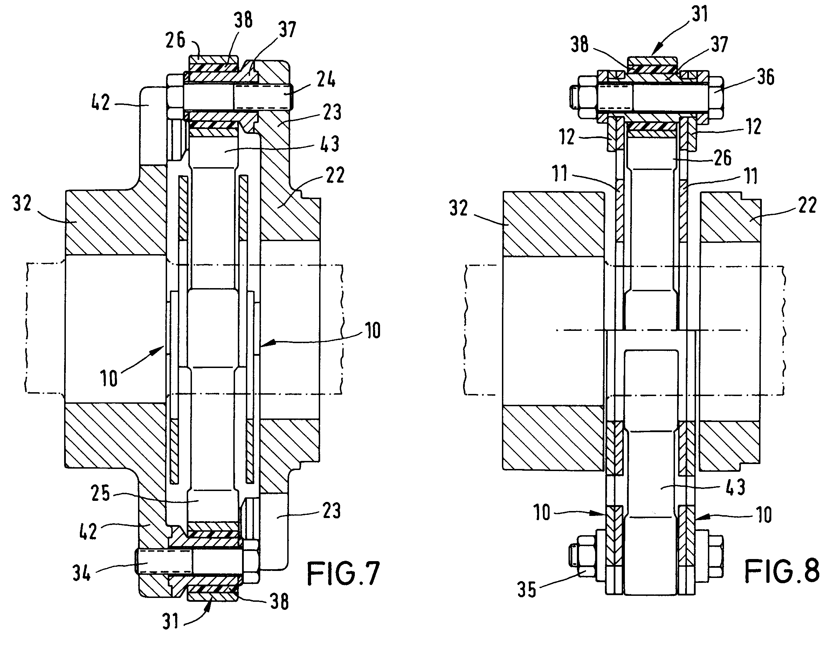

Eine zweite, in den Fig. 6 bis 8 dargestellte Ausführungsvariante verwendet zwei Zwischenglieder 10 der bisher beschriebenen Art, die also jeweils aus zwei identischen Zwischengliedhälften 11 und 12 bestehen. Diese Ausführungsform hat im wesentlichen zwei Vorteile. Zum einen benötigt sie keine zumindest an einem Ende gegabelten Lenkerhebel. Zum anderen erhöht sich durch die doppelte Anordnung die Knicksteifigkeit der Zwischenglieder 10, so daß die Kupplung größere Lasten aufnehmen und/oder die Zwischenglieder noch dünner gestaltet werden können.

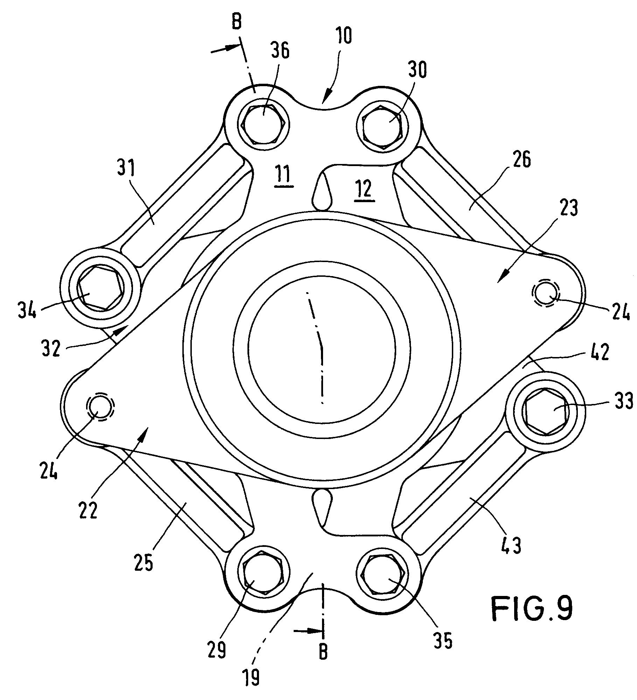

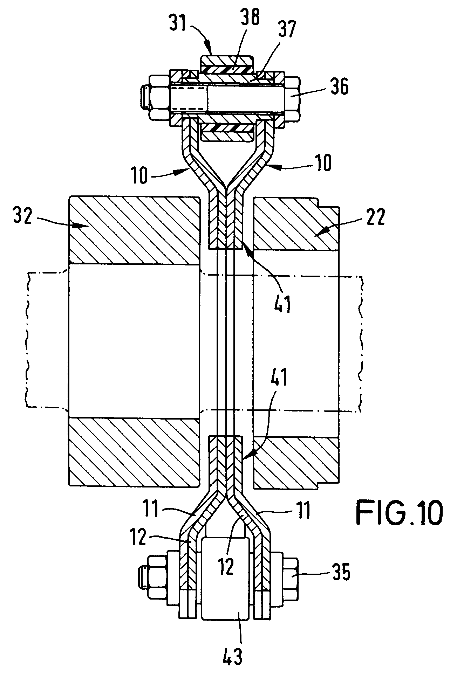

Während die Ausführungsform nach den Fig. 6 bis 8 mit völlig planen Zwischengliedern etwas mehr axialen Einbauraum benötigt als die Ausführung nach den Fig. 3 bis 5, zeigen Fig. 9 und 10 eine Ausführung mit zwei Zwischengliedern 10, die sich von denjenigen nach den Fig. 6 bis 8 dadurch unterscheiden, daß sie in ihren mittleren Bereichen aufeinanderzu verformt sind. Innerhalb dieses Bereichs gegenseitiger Anlage der beiden Kupplungs-Zwischenglieder 10 sind diese, also alle vier Zwischengliedhälften 11, 12 durch eine lösbare, insbesondere Schraub-Verbindung, miteinander verbunden.

In allen Ausführungen sind mit 37 den jeweiligen Verhältnissen angepaßte, von den erwähnten Schraubenbolzen durchgriffene Bundbuchsen bezeichnet. Sie lagern jeweils hülsenförmige Gummi-Metall-Elemente 38, die aus jeweils zwei dünnen, mit einer gummielastischen Einlage 39 durch Vulkanisation miteinander verbundenen Stahlbuchsen bestehen. Jedes Gummi-Metall-Element 38 ist dabei unter radialer Vorspannung auf der ihr zugehörigen Bundbuchse 37 aufgepreßt. Die jeweiligen Lenkerhebel sind mit ihren zugehörigen Gelenkaugen auf die Außenschale des jeweiligen Gummi-Metall-Elements ebenfalls unter radialer Vorspannung aufgepreßt. Eine um die Achse eines Schraubenbolzens erfolgende Relativdrehung zwischen Bundbuchse und Lenkerhebel vollzieht sich also durch elastische Verformung des hülsenförmigen Gummielements. Außerdem gestattet das Gummielement in gewissem umfange kardanische Bewegungen, also Kippbewegungen, die durch Winkelversatz der Achsen der beiden Kupplungshälften 22 und 32 entstehen.

Nur der Vollständigkeit halber sei erwähnt, daß die mit 40 bezeichneten Durchbrechungen in den Zwischengliedhälften 11, 12 der Gewichtseinsparung dienen.

Die Montage und Demontage der mit den erfindungsgemäßen Zwischengliedhälften ausgerüsteten Kupplungen ist sehr einfach. Sie vollzieht im Falle der Demontage durch Lösen der betreffenden Schraubenbolzen, wodurch sich die Lenkerhebel von den Kupplungshälften trennen lassen, ohne daß man die Kupplungshälften 22 und 32 axial voneinander wegrücken muß.

## Patentansprüche

1. Kupplung zum Ausgleich von radialen Bewegungen und Achsversatz zwischen einer ersten Kupplungshälfte und einer zweiten Kupplungshälfte, mit einem ungelagerten Zwischenglied, welches mittels zweier Lenkerhebel mit der ersten Kupplungshälfte einerseits sowie mittels zweier weiterer Lenkerhebel mit der zweiten Kupplungshälfte andererseits verbunden ist, wobei das Zwischenglied aus zwei lösbar miteinander verbundenen, bogenförmigen Zwischengliedhälften besteht, dadurch gekennzeichnet, daß sich die Zwischengliedhälften (11, 12) mit ihren beiden Endabschnitten umfänglich überdecken und in den beiden Überdeckungsbereichen (19) mit je zwei fluchtenden Axialbohrungen (15, 17) zur Aufnahme der die Lenkerhebel anbindenden Bolzen (29, 30, 35, 36) zusammengehalten sind, daß jede Zwischengliedhälfte (11, 12) aus Blech geschnitten ist und zumindest ihre beiden Endabschnitte in derselben Ebene angeordnet sind.

2. Kupplung nach Anspruch 1, dadurch gekennzeichnet, daß die Zwischengliedhälften (11, 12) aus Stahlblech geschnitten sind.

3. Kupplung nach Anspruch 1, dadurch gekennzeichnet, daß die Zwischengliedhälften (11, 12) aus Titanblech geschnitten sind.

4. Kupplung nach Anspruch 1 oder einem der folgenden, dadurch gekennzeichnet, daß die Zwischengliedhälften (11, 12) wenigstens einen zusätzlichen Überdeckungsbereich (20) ausbilden, innerhalb dessen sie lösbar miteinander verbunden sind.

5. Kupplung nach Anspruch 1 oder einem der folgenden, dadurch gekennzeichnet, daß die Lenkerhebel in ihren zwischengliedseitigen Gelenkbereichen gegabelt sind und das Zwischenglied (10) zwischen den Schenkeln (28) der Gabeln (27) aufgenommen sind.

6. Kupplung nach Anspruch 1 oder einem der folgenden, dadurch gekennzeichnet, daß die Lenkerhebel nach Art ungegabelter Pleuel ausgebildet sind und jeweils ein Paar von Zwischengliedhälften (11, 12) vor ihren axialweisenden Außenseiten angeordnet sind.

7. Kupplung nach Anspruch 6, dadurch gekennzeichnet, daß die inneren Bereiche der Zwischengliedhälften (11, 12) mindestens eines der beiden Zwischenglieder (10) aus der Ebene ihres Blechzuschnitts aufeinanderzu verformt, insbesondere gekröpft sind.

8. Kupplung nach Anspruch 6 oder 7, dadurch gekennzeichnet, daß die inneren Bereiche der Zwischengliedhälften (11, 12) mindestens eines der beiden Zwischenglieder (10) bis zur gegenseitigen Anlage aufeinanderzu verformt sind und innerhalb ihres gemeinsamen Anlagebereichs (41) lösbar miteinander verbunden sind.

## Claims

1. Clutch for compensating radial movements and axial misalignment between a first clutch half and a second clutch half, having an unsupported intermediate member which is connected, on the one hand, by two guide levers to the first clutch half and, on the other hand, by two further guide levers to the second clutch half, the intermediate member comprising two arc-shaped intermediate member halves which are detachably connected to one another, characterized in that the intermediate member halves (11, 12) extensively overlap at their two end portions and are held together in the two regions of overlap (19) by in each case two aligned axial bores (15, 17) for receiving the bolts (29, 30, 35, 36) which connect the guide levers, that each intermediate member half (11, 12) is cut from sheet metal and at least its two end portions are disposed in the same plane.

2. Clutch according to claim 1, characterized in that the intermediate member halves (11, 12) are cut from sheet steel.

3. Clutch according to claim 1, characterized in that the intermediate member halves (11, 12) are cut from sheet titanium.

4. Clutch according to claim 1 or one of the following claims, characterized in that the intermediate member halves (11, 12) form at least one additional region of overlap (20), within which they are detachably connected to one another.

5. Clutch according to claim 1 or one of the following claims, characterized in that the guide levers are bifurcated in their articulated regions on the intermediate member side and the intermediate member (10) are received between the limbs (28) of the forks (27).

6. Clutch according to claim 1 or one of the following claims, characterized in that the guide levers are constructed in the manner of non-bifurcated connecting rods and in each case a pair of intermediate member halves (11, 12) are disposed in front of their axially directed outer sides.

7. Clutch according to claim 6, characterized in that the inner regions of the intermediate member halves (11, 12) of at least one of the two intermediate members (10) are deformed, in particular bent at right angles, towards one another out of the plane of their sheet metal blank.

8. Clutch according to claim 6 or 7, characterized in that the inner regions of the intermediate member halves (11, 12) of at least one of the two intermediate members (10) are deformed towards one another up to the point of mutual contact and are detachably connected to one another within their mutual contact region (41).

## Revendications

1. Accouplement de compensation de déplacements radiaux et de désaxement entre une première moitié d'accouplement et une deuxième moitié d'accouplement, avec un organe intermédiaire non-supporté, relié au moyen de deux leviers articulés à la première moitié d'accouplement d'une part, ainsi qu'au moyen de deuxièmes leviers articulés à la deuxième moitié d'accouplement d'autre part, l'organe intermédiaire étant composé de deux moitiés d'organe intermédiaire en forme d'arc reliées ensemble de façon désolidarisable, caractérisé en ce que les moitiés d'organe intermédiaire (11, 12) se recouvrent en périphérie par leurs deux sections d'extrémité et sont maintenues assemblées dans les deux zones de recouvrement (19), à l'aide de deux perçages axiaux (15, 17) alignés, destinés chacun à recevoir les boulons (29, 30, 35, 36) reliant les leviers articulés, en ce que chaque moitié d'organe intermédiaire (11, 12) est découpée à partir d'une tôle et au moins leurs deux sections d'extrémité étant disposées dans le même plan.

2. Accouplement selon la revendication 1, caractérisé en ce que les moitiés d'organe intermédiaire (11, 12) sont découpées à partir de tôles d'acier.

3. Accouplement selon la revendication 1, caractérisé en ce que les moitiés d'organe intermédiaire (11, 12) sont découpées à partir de tôle de titane.

4. Accouplement selon la revendication 1 ou l'une des revendications suivantes, caractérisé en ce que les moitiés d'organe intermédiaire (11, 12) constituent au moins une zone de recouvrement (20) supplémentaire, à l'intérieur de laquelle elles sont reliées ensemble de façon amovible.

5. Accouplement selon la revendication 1 ou l'une des revendications suivantes, caractérisé en ce que les leviers articulés sont fourchus dans leurs zones d'articulation situées du côté de l'organe intermédiaire et reçoivent l'organe intermédiaire (10) entre les branches (28) des fourches (27).

6. Accouplement selon la revendication 1 ou l'une des revendications suivantes, caractérisé en ce que les leviers articulés sont réalisés à la façon d'une bielle non-fourchue et chaque fois un couple de moitiés d'organe intermédiaire (11, 12) étant disposés face à face par leurs faces extérieures orientées axialement.

7. Accouplement selon la revendication 6, caractérisé en ce que les zones intérieures des moitiés d'organe intermédiaire (11, 12) d'au moins l'un des deux organes intermédiaires (10) sont déformées l'une par rapport à l'autre hors du plan de leur flan en tôle, en particulier sont coudées.

8. Accouplement selon la revendication 6 ou 7, caractérisé en ce que les zones intérieures des moitiés d'organe intermédiaire (11, 12) d'au moins l'un des deux organes intermédiaires (10) sont déformées l'une par rapport à l'autre jusqu'à venir en appui mutuel et sont reliées ensemble de façon amovible à l'intérieur de leur zone d'appui (41) commune.
